# EUROPEAN PATENT APPLICATION

(11) **EP 4 327 664 A2**
(43) Date of publication of application: **28.02.2024**
(21) Application number: 22923714.4
(22) Date of filing: 29.12.2022
(51) Int. Cl.: A23D 7/005

(54) **ANIMAL FAT TISSUE SUBSTITUTES FOR MEAT PRODUCTS AND ALTERNATIVES AND PREPARATION METHOD THEREOF**

(30) Priority: 27.01.2022 US 202263303596 P
(71) Applicant: ALIANZA TEAM INTERNATIONAL S.A., Bogotá (CO)
(72) Inventor: ACOSTA FERNÁNDEZ, Rolando Andrés, Bogotá, Cundinamarca (CO); CASTRO LÓPEZ, Camilo Andrés, Cajicá, Cundinamarca (CO)
(74) Representative: ZBM Patents - Zea, Barlocci & Markvardsen
(86) International application number: PCT/IB2022/062897
(87) International publication number: WO 2023/144622

(57) **Abstract**

The present invention relates to emulsified animal fat substitutes structured with a vegetable protein matrix, hydrocolloids, water, vegetable oils, and flavor promoters, and preparation processes thereof, useful in the preparation of meat products and meat product alternatives.

## Description

### TECHNICAL FIELD OF THE INVENTION

The present invention belongs to the field of food engineering and consists of an emulsified animal fat tissue substitute structured with a matrix of vegetable protein, hydrocolloids, water, vegetable oils, and flavor promoters that mimics the functionality and organoleptic characteristics of an animal fat tissue within meat products and alternatives. The present invention is also related to the preparation process of said emulsified formulation to obtain the animal fat tissue substitute.

### TECHNICAL BACKGROUND

Meat substitutes, analogs, or alternatives are food products with organoleptic characteristics and/or nutritional aspects similar to those of meat, but which are based on components of non-animal origin.

The objective of meat substitutes is to imitate the appearance of meat, including the appearance, aroma, flavor and texture of raw or ground meat, manipulating the color, the fat component and the general structure through the use of vegetable and/or fungal components. For example, to recreate the color of fresh meat and change to brown when cooked, heat-stable fruit and vegetable extracts (*including apple extract, beet juice, among others*) or recombinant heme proteins have been used. Similarly, to mimic the appearance of fat, semi-solid and emulsified vegetable fats (*e.g., coconut oil, cocoa butter*) are used within meat substitutes. Flavor additives are incorporated to add, enhance or mask specific flavor notes and generally comprise 3 to 10% of the substitute of interest (See Rubio, NR, Xiang, N. & Kaplan, DL Plant-based and cell-based approach to meat production. Nat Commun 11, 6276 (2020). https://doi.org/10.1038/s41467-020-20061-y).

Food segments dedicated to meat alternatives face increasingly demanding and innovative challenges. Indeed, the use of vegetable proteins in meat substitutes tends to be associated with bitter and astringent flavors. Therefore, with such substitutes it is necessary to subject the compositions to additional treatment processes for the selective removal of unwanted compounds.

The incorporation of fat, as a contributor of functionality in protein matrices, is not the exception to these challenges, especially if it is recognized that the lipid component of the meat is crucial for the texture and flavor of the food. In animals (*beef, pork, chicken, etc*.) fat is not found isolated in its lipid phase *per* se, but on the contrary, it forms an integral part of a type of specialized connective tissue, called adipose or fatty tissue.

Fat is an essential component in the human diet that not only provides energy but also contributes with essential fatty acids necessary to meet the body's nutritional requirements. In fact, the nutritional properties of meat are largely related to its lipid content and fatty acid composition. In addition, fat gives food flavor, aids in the absorption of vitamins, and plays an important role in the immune response of humans and animals.

Lipids are added to other meat analogs in the form of liquid or semi-liquid glyceride butter from synthetic or sources, such as plants or animals. Due to the public target of meat analogs, plant-based lipid sources are generally used. Although the lipid component does not directly contribute structural characteristics for the meat analog, fat substitutes are crucial to increase palatability and broaden the appeal of the alternative product.

In the state of the prior art, developments of alternative meat products have been reported that incorporate plant-based components to imitate the protein and lipid phases of meat-based products. For example, WO/2015/153666 discloses meat replacement products, which include plant-based products that mimic the texture, appearance, and sensory aspects of ground meat. These characteristics include stringiness, heterogeneity in texture, meaty flavor, and color transition from red to brown during cooking of ground beef. Said described meat replica composition comprises a meat mass, a carbohydrate-based gel, a non-animal fat, a flavoring agent, a binding agent, and an additional protein with heme and/or an iron salt, among others.

On the other hand, document WO/2021/142157 provides meat-like food products comprising salt butter (*from Shorea robusta tree*) compositions. Among these butters, salt emulsions or mixtures of said butter with other lipids are included. Processes for the production of meat-like food products and salt butter compositions are further provided. In particular, the meat-like food product comprises between 0.001 % and 50% by mass of salt butter, which is combined with vegetable proteins, emulsions, binding agents, hydrocolloids and/or gums to obtain the same structure and organoleptic characteristics close to an animal meat product.

The use of vegetable compositions that replace lipid components both in alternatives and meat products is also disclosed in the prior art. In this regard, document WO/2008/124629 provides meat compositions and meat-like compositions comprising colored structured protein products and which may optionally include animal meat. Said animal meat compositions may contain a vegetable protein, a source of vegetable fat, and additional binder or gelling ingredients, among others.

According to the above technologies, it is clear that developments related to meat products or alternatives that include protein and lipid components of plant origin are known in the prior art. However, said compositions or products include such components to improve the structure or appearance of the meat alternative as a whole. In fact, none of the developments focuses on producing an animal fat tissue substitute separately with different applications in meat products or their alternatives. This is how the described combinations of components of plant origin allow the structuring of a meat substitute but do not offer a specific solution that incorporates or replaces the lipid component in said products in a stable and structured manner.

In addition, these meat substitutes usually present differentiated challenges associated with the appearance, cohesiveness, release of ingredients, and sensory effect of the product, among others. Indeed, said substitutes without a lipid component that mimics the organoleptic characteristics of animal fat tissue lack marbling, or the amount of streaky fat within the meat product. Furthermore, such substitutes do not produce the same biting sensation when the food is eaten and the ingredients may not be released properly during cooking. This leads to poor sensory performance during the consumption experience.

There are also in the prior art products related to vegetable components that are combined in a gel-based system to improve the flavor of foods. In this regard, document WO/2003/015538 presents gelled food products that can be used to improve the taste and/or texture of consumable food items. In particular, a self-sustaining composite food product comprising an edible gel that is substantially solid at room temperature is disclosed. Among the main components, said product includes a flavoring and/or texturizing component uniformly distributed throughout, a gelling agent, with different options and proportions thereof, and may comprise additional fat and/or oil components and vegetable proteins.

The potential of these products as substitutes for lipid components, *a priori*, is clear. However, it is not specified anywhere that said gelled food products have particular applications as lipid components in meat products or alternatives, much less that they are designed to imitate the same organoleptic and structural characteristics of animal fat tissues.

Given all of the above, it is clear then that in the state of the art there is still a need to offer an emulsified and structured product with vegetable protein and lipid components that mimics the functionality and organoleptic characteristics of an animal fatty tissue and that in turn has applications in meat products and alternatives.

### GENERAL DESCRIPTION

In accordance with the teachings of the state of the prior art and taking into account the existing technical needs, the present invention reveals an emulsified animal fat tissue substitute structured with a matrix of vegetable protein, hydrocolloids, water, vegetable oils, and promoters of flavor, among others, which mimics the functionality and nutritional characteristics of an animal fatty tissue within meat products and alternatives. The present invention is also related to the process for the preparation of said emulsified composition to obtain the animal fat tissue substitute.

The animal fat tissue substitute comprises between approximately 30% to 75% w/w of at least one vegetable oil, between approximately 0% to 25% w/w of at least one vegetable protein, between approximately 0% to 15% w/w of at least one hydrocolloid, and between approximately 25% to 75% w/w of water, based on the total weight of the animal fat tissue substitute, wherein the content of saturated fatty acids of the animal fat tissue substitute varies between 4.3% and 29.0% w/w. The animal fat tissue substitute also comprises between approximately 0% and 2% w/w of at least one additional agent selected from the group consisting of flavorings, preservatives, colorants, acidulants, and bioactives, among others.

The animal fat substitute also comprises approximately 60% w/w of at least one vegetable oil, approximately 4% w/w of at least one vegetable protein, approximately 2% of at least one hydrocolloid, and approximately 34% w/w of water, based on the total weight of the animal fat substitute, wherein the content of saturated fatty acids of the animal fat tissue substitute varies between 4.3% and 29.0% w/w. The animal fat tissue substitute also comprises approximately 1.2% w/w of at least one additional agent selected from the group consisting of flavorings, preservatives, colorants, acidulants, and bioactives, among others.

The process for the preparation of an animal fat tissue substitute according to the invention consists of the initial hydration of the vegetable protein with water and the subsequent adjustment of its pH to modify the ionic interactions of the protein solution. The hydrated protein is then heated and hydrocolloids are added to form a non-covalent complex or structuring system with the hydrated protein. Additional agents and minor ingredients are added to the structuring system mixture with stirring and the mixture is heated to a higher temperature to add the previously dissolved vegetable oils. The components of the substitute are mixed maintaining the temperature until a creamy and strong gel emulsion is obtained.

Said animal fat tissue substitute and its preparation process have been designed to solve the disadvantages associated with the lack of a stable emulsified and structured composition that mimics the characteristics of the lipid phase of a meat product or alternative. Indeed, said substitute for animal fatty tissue can mimic the organoleptic characteristics of animal adipose tissue and can be used as fatty tissue, 100% animal-free and with a low saturated fatty acids content, in meat products or alternatives that imitate the marbling and mouthfeel of sausages, salamis, chorizos, hamburgers, among others.

### DETAILED DESCRIPTION

The object of the present application and the technical advantages achieved may be appreciated in greater detail through the subsequent description of the emulsified animal fat tissue substitute structured with a matrix of vegetable protein, hydrocolloids, water, vegetable oils, and additional agents that mimic the functionality and nutritional characteristics of an animal fatty tissue within meat products and alternatives, referring to the following Figures:
FIG. 1 is a flow chart of the process for the preparation and production of the animal fat substitute of the present invention.
FIG. 2 represents a comparative textural graph of a) the hardness and b) the cohesiveness of the animal fat substitute of the present invention in comparison with beef and pork fatty tissue as a reference.
FIG. 3 is a differential scanning calorimetry (DSC) thermogram describing the thermal stability of the emulsions with respect to the heating profile of the material.
FIG. 4. represents a comparative graph of the behavior of the strength of the hydrogel with respect to the mixing ratio of hydrocolloids A: Xanthan gum and B: Glucomannan.
FIG. 5 is an illustrative example of the isoelectric behavior of a) soy protein and b) protein:hydrocolloid complex with respect to pH changes.
FIG. 6 is an illustrative example of the application of the animal fat substitute of the present invention in a meat alternative (vegan hamburger).
FIG. 7 is an illustrative example of the application of the animal fat substitute of the present invention in a meat product (salami).
FIG. 8 is an illustrative example of the application of the animal fat substitute of the present invention in a meat alternative (crispy vegan crackling).

Unless otherwise defined, all technical terms used herein have the same meaning as is commonly understood by those skilled in the art to which this description pertains. Any limitation to the defined terms shall be understood not to invalidate the other meanings that make up a definition in other contexts.

The term "*acidifier*", as used herein, refers to an additive substance in foods that modifies their acidity and enhances their flavor. The regulation of the pH through the acidification produced by this type of acidifiers may inhibit microbial growth.

The term "*animal fatty tissue*", as used herein, refers to adipose tissue or body fat of animal origin, composed of adipocytes where energy is stored in the form of fat.

The term "*approximately*" or "*approximately*", as used herein and when used in conjunction with an amount, percentage, or parameter, indicates that the amount, percentage, or parameter may vary within 0.05%, 0.1%, 0.15%, 0.2%, 0.5%, 1%, 2%, 3%, 4%, 5%, 6%, 7%, 8%, 9%, or 10 % of the value or range of values recited.

The term "*at least*", as used herein, indicates the option of including one or more of the associated components or parameters. For purposes of this specification, the term *at least* defines the inclusion of between one and five components or parameters with which it is associated.

The term "*bioactive*", as used herein, refers to any element selected from the group consisting of vitamins, minerals, nucleotides, amino acids, and other agents, which are added to the composition or formulation of the animal fat substitute to improve its nutritional profile.

The terms "*comprise*", "*comprising*", "*consist*", "*consisting*", "*include*", "*including*", "*has*", "*having*", "*with*" or variations thereof are intended to be inclusive but not limiting.

The term "*colorant*", as used herein, refers to an agent that imparts color to a composition or foodproduct. For purposes of this specification, the term colorant encompasses color enhancers (i.e., agents that increase color, color intensity or saturation, color tone, or enhance color perception) and color stabilizers (i.e., agents that prevent color changes or color perception).

The term "*emulsion*", as used herein, refers to a mixture of immiscible liquids in which one or more liquids are dispersed as droplets in another liquid.

The term "*flavorant*", as used herein, refers to a chemical compound capable of eliciting a response in the taste system to affect a sensory perception of taste.

The term "*gel*", as used herein, refers to a colloidal dispersion with solid or semi-solid phase properties.

The term "*hydrocolloid*", as used herein, refers to neutral carbohydrate macromolecules or their acidic or oxidized forms, some with protein moieties and others with esterified chemical groups on the acidic sugars.

The term "*meat*" or "*meat product*", as used herein, refers to an edible tissue comprising or characterized by the presence of protein(s). For purposes of this specification, it will be understood that "*meat*" is of animal origin unless otherwise indicated.

The term "*meat alternative*" or the like, as used herein, refers to a product with organoleptic characteristics similar to meat but based on proteins of non-animal or vegetable origin.

The term "*preservative*", as used herein, refers to a chemical used as a food additive that, when added to food, stops or minimizes spoilage caused by the presence of different types of microorganisms.

The term "*vegetable oil*", as used herein, refers to a triglyceride extracted from a plant. For purposes of this specification, vegetable oils can be saturated and unsaturated, depending on their fatty acid content. Saturated vegetable oils are those that contain fatty acids that lack double bonds between individual carbon atoms and that are solid at room temperature. Unsaturated vegetable oils are those that contain fatty acids with at least one double bond in the carbon chain and that are liquid at room temperature. Unsaturated vegetable oils can in turn be defined as monounsaturated vegetable oils, when they only have one double bond, or polyunsaturated, when they have more than one double bond in their carbon chain.

The term "*vegetable protein*", as used herein, refers to a macromolecule derived from plants and their fruits, seeds, or parts therefrom, comprising a polymeric form of amino acids of any length. For purposes of this specification, the vegetable protein can be isolated, when it has a protein concentration of up to 90%, or concentrated, when it has a protein concentration of up to 60%.

It is clarified that the terms in which this specification has been drafted should always be taken in a broad and non-limiting sense.

While the general inventive concepts are capable of being embodied in many different forms, specific embodiments of the invention are described in detail herein. The present disclosure should be considered as an exemplification of the principles of the general inventive concepts. Accordingly, the general inventive concepts are not intended to be limited to the specific embodiments illustrated and described herein.

The present invention provides an animal fat tissue substitute comprising at least one vegetable oil, at least one vegetable protein, at least one hydrocolloid, or mixtures thereof, and water.

In one embodiment of the invention, the at least one vegetable oil may be an unsaturated vegetable oil, selected from the group consisting of rapeseed, sunflower, soybean and high oleic oils, among others. In another embodiment of the invention, the at least one vegetable oil can be a mixture of unsaturated oils with oils with high percentages of saturated fatty acids, selected from the group consisting of palm, palm kernel and coconut oil, among others.

In one embodiment of the invention, the at least one vegetable protein can be an isolated or concentrated protein, selected from the group consisting of soy, pea, barley, oat, chickpea, and rice protein, among others.

In one embodiment of the invention, the at least one hydrocolloid is selected from the group consisting of alginate, carrageenan, agar, pectin, gum arabic, gellan, CMC (carboxy methylcellulose), guar, crystalline cellulose, xanthan or xanthan gum, glucomannan (konjac), MC (methylcellulose), among others.

In a preferred embodiment of the invention, the animal fat substitute comprises a vegetable oil, a vegetable protein, a mixture of hydrocolloids, and water. In an even more preferred embodiment of the invention, the animal fat substitute comprises rapeseed oil, isolated soy protein, glucomannan, xanthan gum, and water. In another even more preferred embodiment of the invention, the animal fat substitute comprises palm oil, water, isolated soy protein, glucomannan, xanthan gum, and water.

In one embodiment of the invention, the animal fat tissue substitute further comprises at least one additional agent selected from the group consisting of flavoring agents, preservatives, colorants, acidulants, and bioactive agents, among others.

In a preferred embodiment of the invention, the flavoring agents are selected from the group consisting of salt, natural, and artificial flavors, and mixtures thereof. In an even more preferred embodiment of the invention, the flavoring agent is a natural flavor obtained from yeast extract (Saccharomyces cerevisiae) with hydrolyzed soy and corn protein (SPC-15-1222 from Levapan).

In a preferred embodiment of the invention, the preserving agents are selected from the group consisting of sorbates, benazoates, sodium acetate, and natural preservatives, including essential oils and organic acids such as powdered acetic acid, propionic acid, etc., and mixtures thereof.

In a preferred embodiment of the invention, the coloring agents are selected from the group consisting of natural colorants, such as carotenes, yeast extract, beet extract, red carmine, annatto, etc., and mixtures thereof.

In a preferred embodiment of the invention, the acidifying agents are selected from the group consisting of citric acid, lactic acid, malic acid, and phosphoric acid, etc., and mixtures thereof.

In a preferred embodiment of the invention, the bioactive agents are selected from the group consisting of fat-soluble vitamins, alpha-linolenic acid (ALA), Omega-3 fatty acids (EPA and DHA, among others), and mixtures thereof. In an even more preferred embodiment of the invention, the bioactive agents are selected from fat-soluble vitamins consisting of vitamins A, D, E, and K, among others.

In a preferred embodiment of the invention, the animal fat substitute comprises a vegetable oil, a vegetable protein, a mixture of hydrocolloids, water, and one to five additional agents. In an even more preferred embodiment of the invention, the animal fat substitute comprises rapeseed oil, isolated soy protein, glucomannan, xanthan gum, water, natural flavor SPC-15-1222, salt, a mixture of sorbate and benzoate, and citric acid. In another even more preferred embodiment of the invention, the animal fat substitute comprises palm oil, isolated soy protein, glucomannan, xanthan gum, water, natural flavor SPC-15-1222, salt, a mixture of sorbate and benzoate, and citric acid.

In one embodiment of the invention, the animal fat tissue substitute comprises between approximately 30% and 75% w/w of at least one vegetable oil, between approximately 0% and 25% w/w of at least one vegetable protein, between approximately 0% and 15% w/w of at least one hydrocolloid, and between approximately 25% and 75% w/w of water, based on the total weight of the animal fat substitute.

In one embodiment of the invention, the animal fat tissue substitute comprises between approximately 30% and 75% w/w of at least one vegetable oil, between approximately 0% and 25% w/w of at least one vegetable protein, between approximately 0% and 15% w/w of at least one hydrocolloid, between approximately 25% and 75% w/w of water, and between approximately 0% and 2% w/w of at least one additional agent based on total weight of the animal fat tissue substitute, wherein the additional agent is selected from the group consisting of flavorings, preservatives, colorants, acidulants, and bioactives, or mixtures thereof.

In another embodiment of the invention, the animal fat substitute comprises between approximately 30% and 75% w/w of at least one vegetable oil, between approximately 0% and 25% w/w of at least one vegetable protein, between approximately 0% and 15% w/w of at least one hydrocolloid, between approximately 25% and 75% w/w water, between approximately 0% and 2% w/w of at least one flavoring agent, between approximately 0% and 0 0.2% w/w of at least one preservative agent, and between approximately 0% and 0.15% w/w of at least one acidifying agent, based on the total weight of the animal fat substitute.

In a preferred embodiment of the invention, the animal fat substitute comprises approximately 60% w/w of at least one vegetable oil, approximately 4% w/w of at least one vegetable protein, approximately 2% of at least one hydrocolloid, and approximately 34% w/w of water, based on the total weight of the animal fat substitute.

In an even more preferred embodiment of the invention, the animal fat substitute comprises approximately 60% w/w of rapeseed oil, approximately 4% w/w of isolated soy protein, approximately 0.8% of glucomannan, approximately 1.2% of xanthan gum, and approximately 34% w/w of water, based on the total weight of the animal fat substitute.

In an even more preferred embodiment of the invention, the animal fat substitute comprises approximately 60% w/w of palm oil, approximately 4% w/w of isolated soy protein, approximately 0.8% of glucomannan, approximately 1.2% of xanthan gum, and approximately 34% w/w water, based on the total weight of the animal fat substitute.

In another preferred embodiment of the invention, the animal fat substitute comprises approximately 60% w/w of at least one vegetable oil, approximately 4% w/w of at least one vegetable protein, approximately 2% of at least one hydrocolloid, approximately 32.8% w/w of water, and approximately 1.2% of at least one additional agent, based on the total weight of the animal fat substitute.

In an even more preferred embodiment of the invention, the animal fat substitute comprises approximately 60% w/w of rapeseed oil, approximately 4% w/w of isolated soy protein, approximately 0.8% of glucomannan, approximately 1.2% of xanthan gum, approximately 32.8% w/w of water, and approximately 1.2% of at least one additional agent, based on the total weight of the animal fat substitute.

In an even more preferred embodiment of the invention, the animal fat substitute comprises approximately 60% w/w of palm oil, approximately 4% w/w of isolated soy protein, approximately 0.8% of glucomannan, approximately 1.2% of xanthan gum, approximately 32.8% w/w of water, and approximately 1.2% of at least one additional agent, based on the total weight of the animal fat substitute.

In an even more preferred embodiment of the invention, the animal fat substitute comprises approximately 60% w/w of rapeseed oil, approximately 4% w/w of isolated soy protein, approximately 0.8% of glucomannan, approximately 1.2% of xanthan gum, approximately 32.8% w/w of water, approximately 1% of at least one flavoring agent, approximately 0.15% of at least one preserving agent, and approximately 0.05% of at least one acidifying agent, based on the total weight of the animal fat substitute.

In an even more preferred embodiment of the invention, the animal fat substitute comprises approximately 60% w/w of palm oil, approximately 4% w/w of isolated soy protein, approximately 0.8% of glucomannan, approximately 1.2% of xanthan gum, approximately 32.8% w/w of water, approximately 1% of at least one flavoring agent, approximately 0.15% of at least one preserving agent, and approximately 0.05% of at least one acidifying agent, based on the total weight of the animal fat substitute.

In an even more preferred embodiment of the invention, the animal fat substitute comprises approximately 60% w/w of rapeseed oil, approximately 4% w/w of isolated soy protein, approximately 0.8% of glucomannan, approximately 1.2% of xanthan gum, approximately 32.8% w/w of water, approximately 0.5% of natural flavor SPC-15-1222, approximately of 0.5% salt, approximately 0.15% of a sorbate and benzoate mixture, and approximately 0.05% of citric acid, based on the total weight of the animal fat substitute.

In an even more preferred embodiment of the invention, the animal fat substitute comprises approximately 60% w/w of palm oil, approximately 4% w/w of isolated soy protein, approximately 0.8% of glucomannan, approximately 1.2% of xanthan gum, approximately 32.8% w/w of water, approximately 0.5% of natural flavor SPC-15-1222, approximately 0.5% of salt, approximately 0.15% of a sorbate and benzoate mixture, and approximately 0.05% of citric acid, based on the total weight of the animal fat substitute.

In one embodiment of the invention, the animal fat substitute comprises a mixture of hydrocolloids in a ratio of 10:0, 8:2, 6:4, 4:6, 2:8, or 0:10. In a preferred embodiment of the invention, the animal fat substitute comprises a mixture of hydrocolloids in a ratio of 6:4. In an even more preferred embodiment of the invention, the hydrocolloid mixture consists of a xanthan gum:glucomannan mixture.

In one embodiment of the invention, the animal fat substitute comprises a mixture of additional preservatives in a 1:1 ratio. In a preferred embodiment of the invention, the additional preservatives mixture consists of a sorbate: benzoate mixture.

In one embodiment of the invention, the formulation of the animal fat tissue substitute can be adjusted according to the vegetable oil, or mixture thereof, of its lipid phase to produce substitutes with different textural and functional properties.

In a preferred embodiment of the invention, the formulation of the animal fat substitute can be adjusted to produce substitutes with different properties in terms of hardness, cohesiveness, and elasticity.

In one embodiment of the invention, the formulation of the animal fat substitute can be adjusted according to the vegetable oil of its lipid phase to obtain different contents of saturated fatty acids.

In one embodiment of the invention, the animal fat substitute has a low content of saturated fatty acids. In a preferred embodiment of the invention, the animal fat substitute has a saturated fatty acid content of between approximately 4.3% w/w and 29% w/w. In an even more preferred embodiment of the invention, the content of saturated fatty acids is at least approximately 4.3% w/w. In another even more preferred embodiment of the invention, the content of saturated fatty acids is at most approximately 29% w/w.

In one embodiment of the invention, the animal fat substitute comprises a protein:hydrocolloid complex.

In one embodiment of the invention, the formulation of the animal fat substitute can be adjusted according to the proportion of drinkable water to guarantee the total hydration of the soy protein and the formation of the protein:hydrocolloid complex.

In a particular embodiment of the invention, the formation of the protein:hydrocolloid complex occurs at a pH of at least 6.0.

In one embodiment of the invention, the animal fat substitute is a gel emulsion.

In one embodiment of the invention, the animal fat tissue substitute is used as a lipid component in meat products, preferably cold meats such as sausages, salamis, chorizo, hamburgers, bacon, among others.

In one embodiment of the invention, the animal fat tissue substitute is used as a lipid component in meat alternatives, preferably in sausages, salamis, chorizo, hamburgers, bacon, among others.

In one embodiment of the invention, the animal fat tissue substitute is used as a lipid component in food applications associated with surimi, seafood, vegan cheeses, among others.

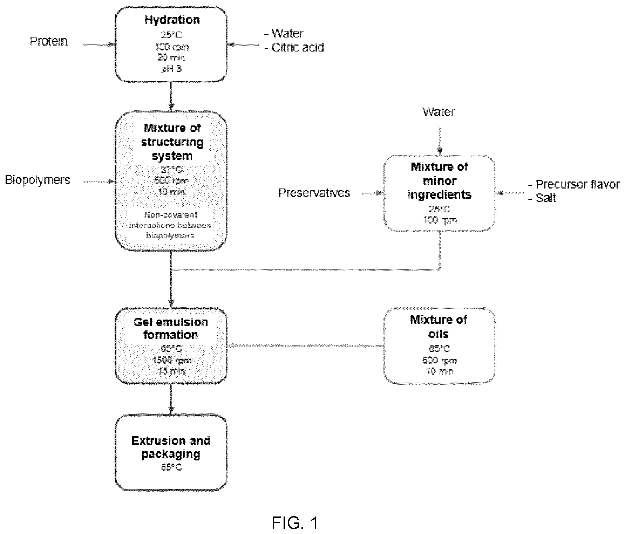

The present invention also relates to a process for the preparation of an animal fat tissue substitute (FIG. 1), where the preparation process comprises the steps of:
a) hydrating the vegetable protein through the addition of a majority fraction of water under constant stirring for a period of time between approximately 10 to 20 minutes;
b) adjusting the pH of the hydrated protein solution to at least approximately 6.0, using an approximately 20% citric acid solution;
c) once the hydration period has elapsed, heating the mixture to a temperature between approximately 30°C and 40°C with constant stirring and adding at least one hydrocolloid;
d) hydrating the mixture from step c) for approximately 5 to 15 min, maintaining constant temperature and stirring;
e) adding the additional flavoring agents, preservatives, and/or bioactive agents, which were previously diluted in the remaining fraction of water, to the mixture of the protein:hydrocolloid complex;
f) heating the mixture from step e) to a temperature between approximately 65°C to 70°C, maintaining constant stirring;
g) preheating the lipid phase comprising at least one vegetable oil to a temperature of approximately 65°C;
h) mixing the lipid phase with the mixture from step f), maintaining the preheating temperature and increasing the agitation at a speed of approximately between 1000 and 2000 rpm until the formation of the emulsion;
i) keeping the mixture under constant agitation until an emulsion is reached, in which the aqueous phase is fully incorporated into the protein:hydrocolloid complex and a homogeneous viscoelastic fluid is obtained.

In a preferred embodiment of the invention, before step a) of the process for the preparation of the animal fat tissue substitute, the ingredients are weighed according to the established percentage of each component based on the total weight of the animal fat tissue substitute.

In a preferred embodiment of the invention, in step a) of the process for the preparation of the animal fat tissue substitute, the majority fraction of water with which the soy protein is hydrated is approximately 90%.

In a preferred embodiment of the invention, in step a) of the process for the preparation of the animal fat tissue substitute, the soy protein is hydrated with stirring at a speed of approximately 100 rpm.

In a preferred embodiment of the invention, in step a) of the process for the preparation of the animal fat tissue substitute, the soy protein is hydrated for a period of time of approximately 15 min.

In a preferred embodiment of the invention, in step a) of the process for the preparation of the animal fat tissue substitute, the soy protein is hydrated at room temperature or at approximately 25°C.

In a preferred embodiment of the invention, in step c) of the process for the preparation of the animal fat substitute, the mixture is heated to a temperature of approximately 37°C.

In a preferred embodiment of the invention, in step d) of the process for the preparation of the animal fat tissue substitute, the mixture is hydrated with stirring at a speed of between approximately 500 rpm and 1000 rpm. In a more preferred embodiment of the invention, in step d) of the process for the preparation of the animal fat tissue substitute, the mixture is hydrated with stirring at a speed of approximately 900 rpm.

In a preferred embodiment of the invention, in step d) of the process for the preparation of the animal fat tissue substitute, the mixture is hydrated for a period of time of approximately 10 min.

In a preferred embodiment of the invention, the dilution of the additional agents in step e) of the process for the preparation of the animal fat tissue substitute is carried out at room temperature or at 25°C and under constant stirring at a speed of approximately 100 rpm.

In a preferred embodiment of the invention, in step e) of the process for the preparation of the animal fat tissue substitute, the remaining fraction of water with which the additional agents are diluted is approximately 10%.

In a preferred embodiment of the invention, as soon as the mixture reaches the temperature defined in step f) of the animal fat substitute preparation process, the next step is continued, without waiting.

In a preferred embodiment of the invention, in step g) of the process for the preparation of the animal fat substitute, the total melting of the at least one vegetable oil must be guaranteed.

In a preferred embodiment of the invention, in step g) of the process for the preparation of the animal fat tissue substitute, the preheating and preparation of the lipid phase mixture occurs under constant stirring at a speed of between approximately 500 rpm and 1000 rpm. In a more preferred embodiment of the invention, in step g) of the process for the preparation of the animal fat tissue substitute, the mixture is hydrated with stirring at a speed of approximately 900 rpm.

In a preferred embodiment of the invention, in step h) of the animal fat substitute preparation process, the agitation speed is increased to approximately 1100 rpm, even more preferably approximately 1800 rpm.

In a preferred embodiment of the invention, the agitation of step h) of the process for the preparation of the animal fat substitute requires blades or shear forces that guarantee the formation of the gelled complex and the structuring of the emulsion. Preferably, the blades or stresses are blade-type blades.

In a preferred embodiment of the invention, the agitation of step h) of the process for the preparation of the animal fat substitute requires an internal scraping system to guarantee total agitation of the product due to its viscoelastic behavior.

In a preferred embodiment of the invention, after stage i) of the process for the preparation of the animal fat tissue substitute, the emulsified product must be transported hot until it is packaged, since once it starts cooling, the product will gel and take on the shape of the final container. In a preferred embodiment of the invention, the emulsified product is shipped and packaged at a temperature of approximately 55°C.

Although the invention has been disclosed in detail for illustrative purposes, it will be recognized that minor variations or modifications are within the scope of the present invention.

### EXAMPLES

### Example 1. Preparation of an animal fat tissue substitute according to an embodiment of the invention.

An animal fat tissue substitute was produced according to one embodiment of the inventive preparation process. For this, a majority fraction of water (90% of the initial amount) was added to the isolated soy protein, which was hydrated under constant stirring, at a speed of 100 rpm, for approximately 15 min.

Next, the pH of the protein solution was adjusted to 6.0, using a 20% citric acid solution (*equivalent to 0.3% of the formulation*). Once the hydration period had elapsed, the mixture was heated with the pH adjusted to 37°C and the glucomannan and xanthan gum were added. Said mixture was mixed for 5 min, maintaining the constant temperature and stirring. Then the other aqueous ingredients (salt, sorbate and benzoate) were added, previously diluted in the remaining fraction of water (10% of the initial amount) and the flavor precursors (SPC-15-1222) on the protein:hydrocolloids complex and the mixture was heated to 65-70°C. This heating was necessary to equalize the temperature of the emulsion phases and activate the biopolymers present in the aqueous phase.

Simultaneously, the rapeseed and/or palm vegetable oil was preheated to 65°C, guaranteeing the total melting of the fat. Once melted, the vegetable oil was added to the mixture of aqueous phases, including the protein:hydrocolloids complex and additional agents, maintaining the preheating temperature. At this point, the agitation was increased to a speed of 1100 rpm until the formation of a strong and creamy emulsion. The emulsified product was packed hot (55°C) and molded according to need. The percentage characterization of the composition of the animal fat tissue substitute obtained (Formula 1 or Formula 2) by this process is listed in Table 1.

**Table 1. Percentage characterization of exemplary composition of the animal fat tissue substitute of the invention**

| **INGREDIENT** | **FORMULA 1** | **FORMULA 2** |
|---|---|---|
| Palm oil-RBD (% w/w) | 59.96 | 0 |
| Rapeseed oil-RBD (% w/w) | 0 | 59.96 |
| Water (% w/w) | 32.82 | 32.82 |
| Isolated soy protein SUPRO XT 219D (% w/w) | 4.00 | 4.00 |
| Glucomannan Konjac Gum YZ-J-25 (% w/w) | 0.80 | 0.80 |
| Ziboxan^{®} F200-Xanthan Gum (% w/w) | 1.20 | 1.20 |
| SPC-15-1222 Levapan natural flavor (% w/w) | 0.50 | 0.50 |
| Salt (% w/w) | 0.50 | 0.50 |
| Sorbate + benzoate (1:1) (% w/w) | 0.16 | 0.16 |
| Citric acid (% w/w) (until pH 6) | 0.06 | 0.06 |
| **Saturated fatty acids content (% w/w)** | 4.3 | 29.0 |

### Example 2. Physicochemical and structural characterization of the animal fat tissue substitute according to one embodiment of the invention.

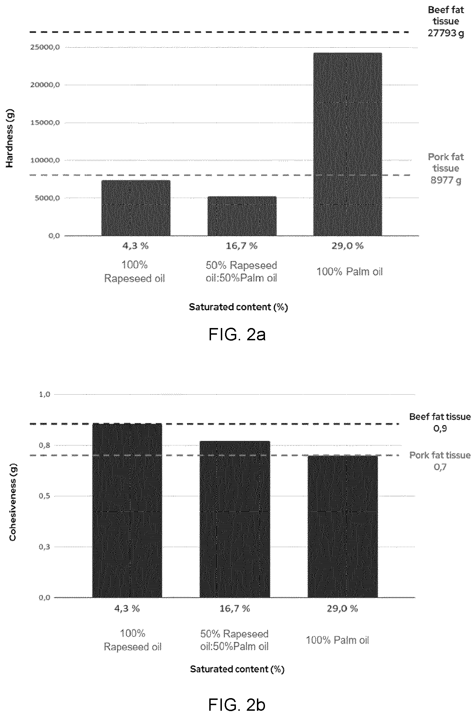

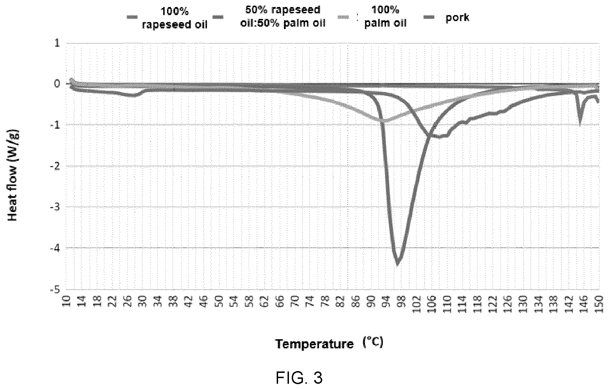

Animal fat tissue substitutes according to one embodiment of the invention (with saturated fatty acid contents of 4.3 or 29.0%) were analyzed to describe their textural behavior and thermal stability using as reference beef and pork animal fat tissues (FIGS. 2 and 3).

### Textural characteristics

The main challenges for the functionality of the animal fat substitute correspond to its appearance and mouthfeel. For this reason, two main characteristics were selected to compare its functionality: hardness and cohesiveness (FIG. 2).

One of the technical objectives of this development corresponds to the possibility of modifying the content of saturated fatty acids present in the lipid phase by mixing different unsaturated vegetable oils. As can be seen in FIG. 2a, the animal fat tissue substitute can have different hardnesses with respect to the saturates content, reaching intervals equivalent to the hardness of animal adipose tissue (from pork and beef).

On the other hand, FIG. 2b shows the behavior of the cohesiveness of the animal fat tissue substitute with the increase in the percentage of saturates. The protein:hydrocolloid complex makes it possible to guarantee a cohesiveness similar to that presented by animal adipose tissues. This characteristic corresponds to the capacity that the material will have to recover its volume after being subjected to stress and, therefore, can be related to the behavior that the product will have under bite force.

### Thermal stability by DSC

Another challenge in functionality of the animal fat tissue substitute corresponds to the controlled release of ingredients (including flavors) under heating to cooking conditions. For this reason, the thermal stability with an increase in temperature was evaluated through differential scanning calorimetry (DSC) (FIG. 3).

In general, all the samples analyzed present an endothermic peak of greater intensity that corresponds to the point of greatest instability of the product caused by the evaporation of the water present in the sample. Once this temperature is reached, the protein:hydrocolloid complex breaks, releasing its ingredients.

For the particular case of the sample with the highest content of saturates (100% palm oil), an endothermic peak is observed at 94°C and with the decrease in the content of saturates in the product, this peak increases to 97°C for sample 50 % rapeseed oil:50% palm oil and at 144°C for the 100% rapeseed oil sample. The foregoing shows that the presence of less saturates allows the protein:hydrocolloid complex to better retain the ingredients and be more stable with temperature.

The thermal stability of the animal fat tissue substitutes was compared with the thermal stability of pork adipose tissue, finding similar behaviors with a peak of greater instability at 105°C. The above results allow us to conclude that the animal fat tissue substitute can have a similar behavior under cooking conditions to animal fat tissue, which guarantees the release of ingredients in an appropriate manner.

### Example 3. Formulation adjustment of the animal fat tissue substitute to increase hydrocolloid resistance and improve the emulsifying capacity of the protein:hydrocolloid complex.

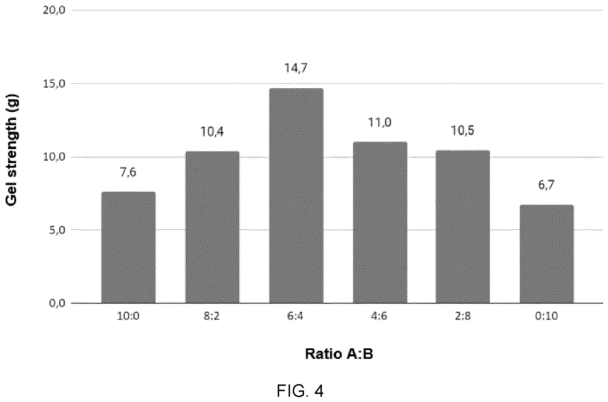

The percentages of glucomannan and xanthan gum were adjusted according to the analysis of synergistic mechanisms between biopolymers, which allows increasing the resistance of the hydrocolloid formed (FIG. 4).

As can be seen in FIG. 4, the gels formed by the mixture of polymers (hydrocolloids) can achieve greater strength due to synergies between molecules and, consequently, a greater power of water retention, thus favoring the structuring of the emulsion. The incorporation of hydrocolloids to the formulation of animal fat tissue substitutes allows the generation of elasticity and cohesiveness attributes that traditional emulsions do not have, allowing to approach the textual behavior of animal fat tissue.

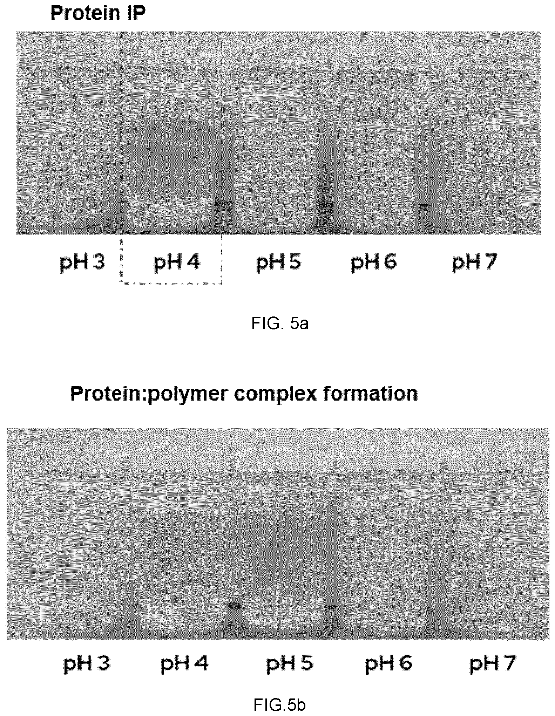

In order to increase the hardness of the animal fat substitutes and improve the emulsifying capacity, a complexing system for hydrocolloids together with proteins was also designed, based on the understanding of the electrostatic interactions between the mixture of hydrocolloids and the amino acid ends of proteins. It was evaluated whether it was possible to take advantage of the emulsifying capacity of proteins and the textural attributes of carbohydrates in order to obtain a complex that would allow a stable gelled emulsion to be obtained. As can be seen in FIG. 5, there are different electrostatic interactions that allow stable complexes to be formed at different pH's, obtaining different textures from viscous solutions to the formation of structured gels.

FIG. 5a presents the precipitation of soy protein due to its isoelectric point close to pH 4. Once the protein:hydrocolloid complex is formed, these isoelectric interactions are modified forming defined and optimal gels at pH 6 and precipitations between pH 4 to 5 .

This demonstrated the need to adjust the pH prior to emulsification to ensure the formation of a complex with the characteristics to mimic animal fat tissue. The parameters for obtaining the protein:hydrocolloid complex and the incorporation of oil in the aqueous phase were adjusted to promote the interaction between compounds and improve the stability of the material to be obtained.

### Example 4. Functionality tests in different applications for meat products and alternatives.

The animal fat tissue substitute was designed to mimic the characteristics of animal fat tissue in different applications:
- Fat tissue (100% animal free) low in saturates for cold meat: sausages, salamis, chorizo, hamburgers, bacon, among others.
- Fat tissue (100% animal free) for meat alternatives that allows to mimic marbling and mouthfeel for sausages, salamis, chorizos, hamburgers, among others.
- Additionally, it is possible to use the animal fat substitute in new applications such as Surimi, seafood, vegan cheeses, among others.

These applications have been subjected to functionality tests with an external chef with satisfactory sensory and textural results:

### Application of the animal fat tissue substitute of the invention in vegan hamburger (meat alternative)

The main ingredients of said meat alternative are: textured and isolated protein (soybean and pea) (18.5% w/w), stabilizers (gluten and methylcellulose) (16.7% w/w); colorants (betanin and caramel color) (0.9% w/w), flavors (beef) (0.9% w/w), water (38.0% w/w), emulsifying fat (14.8% p /w) and the animal fat tissue substitute according to the invention (10.0% w/w).

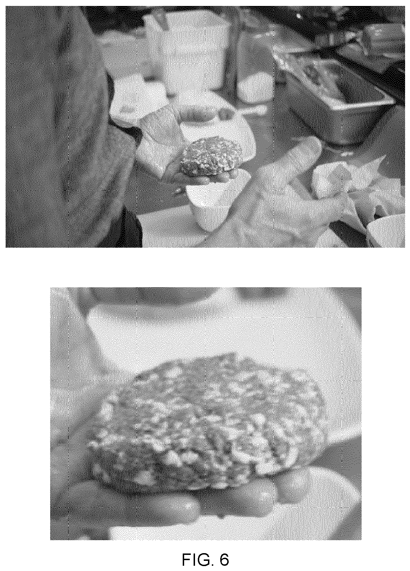

The vegan hamburger according to this application was prepared with the initial mixture of the textured and isolated protein with the stabilizers, colorings and flavorings. Once the mixture was homogeneous, water was added to moisten the ingredients and generate the dough. The emulsifying fat was melted and added to the dough, where all the ingredients were mixed and lubricated. The emulsified mass was stored refrigerated (3-5°C) for two hours. The animal fat substitute of the invention was then ground using an 8mm mesh kitchen mill. Once crushed, the animal fat tissue substitute was mixed with the emulsified mass until it was distributed as homogeneously as possible in the volume. The patties were shaped and cooked (FIG. 6).

According to the results of the functionality test, the product presented the marbling of a real meat and absorbed the coloration of the system where it was embedded, helped to improve mouthfeel when biting, enhanced the flavor of the meat substitute, and was not lost in the cooking of the final product. In fact, it was successfully incorporated into the substitute matrix and conferred greater agglomeration of the system.

### Application of the animal fat tissue substitute of the invention in salami (meat product)

The main ingredients of said meat product are lean pork (69% w/w), lean beef (20% w/w); garlic, pepper, nutmeg and salt (1% w/w); the animal fat tissue substitute according to the invention (10% w/w); and a synthetic polymer for binding.

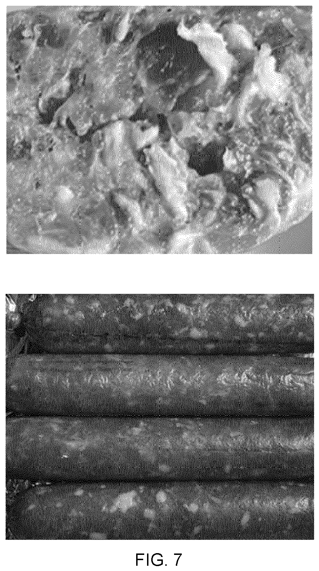

The salami according to this application was prepared by starting with the grinding of beef and pork meat using a kitchen grinder with an 8 mm mesh. The meats were mixed homogeneously with the seasonings and left to rest for 30 min. In parallel, the animal fat tissue substitute of the invention was ground using a kitchen mill with an 8 mm mesh. Once ground, the substitute was mixed with the ground beef and pork until a homogeneous distribution was achieved. The obtained dough was then extruded through a Kitchenaid stuffer and stored using synthetic polymer. The meat product was left to dry and mature for 30 days (FIG. 7).

According to the results of the functionality test, the product showed the marbling of a real meat and absorbed the coloration of the system where it was embedded, helped to improve mouthfeel when biting, enhanced the flavor of the meat substitute, and was not lost in the cooking of the final product. It was satisfactorily incorporated into the substitute matrix and conferred greater agglomeration of the system.

### Application of the animal fat tissue substitute of the invention in crispy crackling (meat alternative)

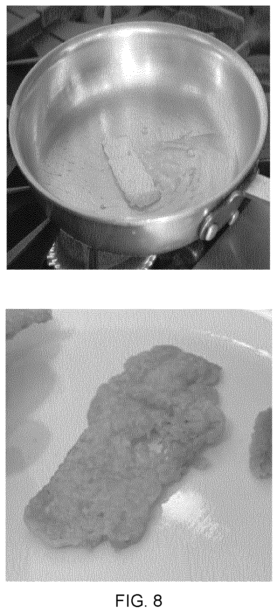

The main ingredients of said meat alternative are the animal fat substitute of the invention and frying oil. Its preparation consisted of cutting the animal fat tissue substitute into slices of no more than 1 cm and cooking them using a little frying oil. The fat tissue substitute was cooked to a light brown color and a crisp, firm texture. (FIG. 8).

According to the results of the functionality test, the fried product had a texture similar to real pork crackling, with cavities that gave it a crunchy structure. The flavor was slightly meaty and acquired a coloration of fried protein close to the color of the natural matrix.

## Claims

1. An animal fat tissue substitute to replace the lipid component in a meat product or alternative, **characterized in that** it comprises:
between approximately 30% and 75% w/w of at least one vegetable oil;
between approximately 0% and 20% w/w of at least one vegetable protein;
between approximately 0% and 15% of at least one hydrocolloid;
between approximately 25% and 75% w/w of water; and
optionally approximately 0% and 2% of at least one additional agent, based on the total weight of the animal fat substitute,
wherein the at least one vegetable oil is selected from the group consisting of rapeseed, sunflower, soybean, high oleic, palm, palm kernel and coconut oil, and mixtures thereof;
wherein the at least one vegetable protein is selected from the group consisting of soy, pea, barley, oat, chickpea, and rice protein, and mixtures thereof;
wherein the at least one hydrocolloid is selected from the group consisting of alginate, carrageenan, agar, pectin, gum arabic, gellan, CMC (carboxylmethylcellulose), guar, crystalline cellulose, xanthan or xanthan gum, glucomannan (konjac), MC (methylcellulose ), and mixtures thereof;
wherein the at least one additional agent is selected from the group consisting of flavorings, preservatives, colorants, acidifiers, and bioactives, among others; and
wherein the animal fat tissue substitute has a saturated fatty acid content of between approximately 4.3% w/w and 29% w/w.
